# EUROPEAN PATENT APPLICATION

(11) **EP 4 459 249 A1**
(43) Date of publication of application: **06.11.2024**
(21) Application number: 24170087.1
(22) Date of filing: 12.04.2024
(51) Int. Cl.: G01H 3/04, G01H 3/10, G01N 29/14, G01N 29/30, H04R 3/00, G04D 7/12, H04R 1/02, H04R 1/08, H04R 1/40, G04B 21/02

(54) **NEAR-FIELD SOUND-BASED WATCHMAKING MEASURING DEVICE AND METHOD**

(30) Priority: 02.05.2023 EP 23170985
(71) Applicant: Richemont International S.A., 1752 Villars-sur-Glâne (CH)
(72) Inventor: VAN LANCKER, Eric, 1290 Chavannes-des-bois (CH); CHRITIN, Vincent, 01170 Cessy (FR)
(74) Representative: Novagraaf International SA

(57) **Abstract**

The present invention relates to a measuring device (1000) for measuring sound generated by an mechanical watch (W), the measuring device comprising: a supporting surface (1100), a plurality of microphones (1200) placed on the supporting surface (1100), a controller (1500) connected to the plurality of microphones (1200), wherein the controller (1500) is configured to process the output of the plurality of microphones (1200) so as to obtain one or more signals representative of the sound generated by the mechanical watch (W).

## Description

The present invention relates to a device and a method for measuring characteristics of a clockwork mechanism of a mechanical watch, and in particular for measuring those through an aerial sound-based measurement.

### State of the art

In the manufacturing of various objects in particular mechanical watch, it is important to check various mechanical characteristics of those objects. One way of achieving this is by measuring sound emissions from the object under test.

For instance, in the manufacturing of mechanical watches, it is important to check the operation of various components in the watch as assembled. This is, for instance, particularly relevant for checking the correct timing of the clockwork mechanism, the presence of manufacturing defects, etc.

In known systems, a final quality control of the watches is carried out by measuring means, which are based on gripping the watch to be controlled in a clamp, or a similar support system, which includes a sensor such as a piezoelectric disc or an accelerometer, in direct or indirect mechanical contact with the watch.

The vibrations from the watch, which can be mechanical or deriving from sound generated in the watch, for instance by the escapement, reach the sensor through structure-borne conduction, and then the sensor converts those vibrations into an electrical signal.

The electrical signal collected in this way is therefore an image of the vibrations of the place of contact between the watch to be examined and the sensor, or the support system. The electrical signal thus contains some information about the internal functioning of the watch, such as, for example, an image of the patterns of the shock trains of the escapement organ, or an image of the rattling or rubbing noise of the automatic winding mass, or in general of any organ in the watch which generates noise and/or mechanical vibrations. As an alternative manner of testing, microphones are known to be placed in the near proximity of the watch and pick up sounds, which are then similarly converted into an electrical signal. Still alternatively, optical measurements have been suggested. The electrical signal can then be advantageously analyzed by signal processing algorithms in order to extract various information concerning the internal functioning of the measured watch.

All these known techniques suffer from intrinsic drawbacks.

The (far field) microphone-based approaches suffer from high self-noise and sensitivity to all environmental noises. Since manufacturing takes places in a noisy environment, it requires testing of each watch in a separate soundproof chamber, which cannot be automated and has high costs.

The optical-based approaches require a direct view of the internal organ which might always be available. In any case, they do not allow testing of the watch when closed in its final configuration.

The vibration-based (or structure-borne conduction based) measurements are based on a piezoelectric or accelerometer sensor. Those sensors are built as resonant sensors, as this is the only manner to make them sensible enough to the low signals which are to be measured. This resonant characteristic severely limits the ability of the sensor to measure vibrations, and thus information, at frequencies different from the resonant frequency, and results in a self-noise of the sensor in those lateral frequencies. In other words, the vibration-based measurements suffer from a reduced detection band in the frequency spectrum. This significantly limits the amount of useful information that those measurements can obtain.

There is therefore a need in the industry for a broadband and low-self-noise measuring device, which can be used in a noisy environment and output reliable information on the internal operation of the watch. This need is also present in the testing of other small hand-held objects, for which a similar measuring device would also be beneficial.

In other words, the available solutions from the prior art have several drawbacks, that it would be advantageous to overcome:
1. The limited bandwidth of acoustic piezoelectric sensors filters a large part of the information present in the acoustic signal, preventing from detecting pertinent information. Basically, a large part of the signal not related to escapement noise of watch is removed.
2. The limited signal-to-noise ratio that forces a long integration time to have the signal emerging from the noise level, hiding all transitory or individual effects.
3. Present setups do not allow a localization of the noise source since they are not multipoint arrays.
4. Present resonant setups are both too noisy and distord the amplitude and the phase of the acquired signal. This does not allow an analysis of the acoustic signature of individual event signals, such as an analysis of individual multiple noises inside a "tic-tac-noise" of an escapement of a mechanical watch. Hence, standard or custom signal analysis algorithms cannot be used at their full potential.

### Summary of the invention

In general, the inventors have recognized that the near-field acoustic emission of a small object is highly variable along its external envelope and that a spatial scanning of the near-field acoustic emission procures a plurality of information that allow to better characterize the acoustic behavior and noise sources and emission of the object being in particular a mechanical watch.

The inventors have also recognized that a microphone-based and spatial scanning-based measurement provides the best available information in terms of frequency band, as microphones have an inherently broader measuring band than vibration sensors, and also as a plurality of microphones provides the best available information from weak signals captures, as combining a plurality of signal captures inherently brings an increased signal-to-noise ratio capability.

In order to avoid the issues associated with the drawbacks in the prior art, the inventors have generally provided a twofold approach.

On the one hand, a plurality of microphones can be used, and their combination allows signal processing techniques which, among other advantages that will be discussed more in details below, can allow lowering the self-noise floor of the measurement.

On the other hand, the plurality of microphones can be placed in close proximity of the object be measured or even in immediate contact of an acoustic inlet of a microphone, such that noise from the environment is limited in reaching the microphones and the sound from the object is measured with very high sensitivity and selectivity.

By such limiting the noise of the environment, lowering the self-noise floor of the measurement and picking-up very sensitively and selectively the sound of the object, the combination of these three advantages results into a method procuring extremely high signal-to-noise ratio sound capture.

In other words, thanks to a very low self-noise by the multiplication of transducers paired in amplitude (typically better than ±1 dB) and in phase (typically better than ±2° at 1 kHz), i.e. an effective net SNR (Signal-to-Noise Ratio) gain of 3 dB per doubling the number of transducers, and the possibility to create, on very small surfaces, some various geometrical arrangement of the acoustic inlets of a plurality of miniature broadband, low-resonance, flat response, from low-audio to ultrasonic bandwidth, for instance such as MEMS (micro-electromechanical systems), then able to operate as a selective acoustic array, possibly focused in various adjacent frequency bands, the technology natively incorporates all the advantages and possibilities of the near-field beamforming (NFB), maximum likelihood estimation (MLE), near-field acoustic holography (NAH), statistical optimized near-field acoustic holography (SONAH), inverse boundary element methods (IBEM), and, more generally, the equivalent source reconstruction methods, the source signals separation, the time reversal methods, the retro-propagation methods, the virtual coherent and incoherent source identification methods.

The following is also observed.

In the watchmaking industry, final quality control of watch movement is carried out by measuring means based on gripping the watch to be checked in a gripper or support system - a feeler - which includes a piezoelectric disc or an accelerometer in direct or indirect contact that picks up a vibration signal from the watch.

The electrical signal collected in this way is therefore an image of the vibrations at the point of contact between the part to be tested and the contact structure of the feeler, intended to contain some information about the internal operation of the watch, such as, for example, an image of the shock train patterns of the escapement organ, or an image of the rattling or rubbing noise of the automatic winding mass, or even of any organ which is the seat of dynamic variable forces in the watch. These signals can then be advantageously analysed by signal processing algorithms in order to extract all sorts of useful indicators testifying to the operation of the measured part.

Other means of measuring the chronometric control of watches include measurement with a microphone and optical, i.e. non-contact, methods.

All of these techniques meet most of the needs of final quality control or the watch laboratory, but each of them nevertheless has the following intrinsic disadvantages:

### Non-contact measurement:

- For measurements with a microphone, high self-noise and sensitivity to environmental noise.
- For light barriers, interferometers or cameras, the need for a direct view of the internal component and, in some cases, a reflector or a special pattern and focused pointing are delicate or restrictive.

### Measurements with vibratory probing using a piezoelectric pad or accelerometer:

- Probes using a piezoelectric disc or accelerometer as a transducer are, by definition, resonant sensors with a certain amount of inherent noise. The resonant characteristic means that, by definition, in order to obtain sufficient sensitivity of the sensor to the watch signals, which are sometimes very weak, the central frequency of this resonance, or the centre of gravity of the various resonance peaks induced by the encapsulation and holding situation of the transducer itself, must be centred on the frequency band of interest of the signals sought, i.e., more precisely, on the frequency band in which the information sought is located, which depends on the nature of the noise source phenomenon (e.g. friction, shock), the overall geometry and materials of the mechanical parts concerned, and the mechanical and acoustic impedance matching qualities at the structural interfaces concerned. All of these parameters can vary considerably in terms of size, materials, types of movements and cases, etc. For example, in the most common case of verifying the chronometric quality or isochronism of a conventional watch with no particular complications, i.e. the need to capture the sound or vibratory signature of the shock train of a standard Swiss lever escapement, the centrally sought-after measurement capability for adjusting the isochronism of the timepiece or verifying the stability of its precision will be to obtain very robust recognition, accurate time-stamping of a series of shock sequence patterns (determination of the instants of occurrence of the release and stop shocks, or even of the impulse, i.e. signal peaks separated by a few thousandths of a second, this sequence repeating itself, for example, six times a second (3 ticks per second), with a certain variability in which essential information about the running of the watch is stored): the resonance of the sensor will typically have to be chosen in the frequency band in which most of the vibratory energy responding to shocks will be located, i.e., because of the geometry of the organ and the structurally connected parts of the movement (gears, plate, bridge, winding stem, caseband) and the materials involved (watchmaking metals), a band for example located at around 10 kHz for a watch specimen of the example cited, but which could just as easily shift into a different frequency range for another specimen of the same model (manufacturing variability), and even more importantly, be located in a completely different frequency band for a watch of a different type (comparison, for example, between a small ladies' watch, a diving watch, a highly complicated timepiece, etc.). ). The whole quality of palpation can then be reduced to two qualities:
   ∘ Firstly, the sensitivity, or more precisely, the signal-to-noise ratio (SNR) of the palpation, which in practice, in order to be usable, will be expressed as the need to obtain spectral flatness with an SNR of at least 40 to 50 dB in the frequency band of interest of the vibratory or acoustic signature, Such a high level is necessary to maintain a sufficient SNR margin for the weakest of these, which contain part of the information sought, or even, in certain cases of advanced diagnosis, all the useful information;
   ∘ Secondly, to obtain the shortest possible pulse response (or rise time to transient signals), i.e. to obtain the most vertical temporal sharpness possible (the sensor's rise time must be faster than the rise time of the desired signal).
- Resonant probes such as those applicable to the field of chronometric watch testing, which constitute the generalised state of the art in terms of acoustic or vibratory probing of watches, are by nature and by definition antinomian and therefore have an obligation to limit compromises with regard to the simultaneous achievement of these three fundamental criteria (signal-to-noise ratio, spectral flatness and temporal rigidity):
   ∘ In particular, they present a low or even very low signal-to-noise ratio (and therefore inoperability) in the lateral extensions of high and low frequencies around the probe's central resonance frequency.
   ∘ They also require a notch filter to be applied to the nominal centre frequency, to attenuate sufficiently (i.e. by around 20 dB) the emergence of the most energetic signature peaks, in order to reduce sufficiently the effect of single-frequency colouring of the signal, without which the measured impulse response would be an image too clearly dominated by the sensor's own response, resulting in a time-stamp detection bias of the desired signal.
- This is the case in particular for most of the piezoelectric pastilles used in the current state of the art in watchmaking instruments, and also when the pastille is replaced by an accelerometer, which most often operates in a first mode with a marked resonance and a high-quality factor, i.e. with typically 40 dB of emergence at resonance. However, due to the variety of watches and mechanisms, in terms of size, materials, complications, regulating organs and water-resistance in particular, there are, apart from the mechanisms and cases of classic watches, very many cases in which information characterising a function, the seat of variable forces emitting an acoustic or vibratory signature, can only be found in frequency bands much higher (and sometimes lower) than the central band of around 10 kHz which contains all the resonant sensors used, in very low amplitudes, and with very short durations of occurrence.

In all these cases, a measurement with high temporal and frequency fidelity of the information sought requires an acoustic or vibration capture solution that enables the same criterion of a signal-to-noise ratio of around 40 or 50 dB to be met, but at frequencies typically one or two decades outside that of a resonant probe, i.e. a much wider range of frequencies, for which the resonant probe becomes totally inoperative.

Since the notion of signal-to-noise comparison has no meaning other than to compare frequency range with identical frequency range, it is legitimate and appropriate, in order to cover almost all the variability in watch typology throughout watch production, and the range of known diagnostic signals or new diagnostics, to break down the frequency spectrum of watch emissions of interest into main bands, for example octaves 5-10 kHz, 10-20 kHz, 20-40 kHz, and finally 40-80 kHz. The centre of this band of maximum interest is at around 20 kHz, so half the band is well beyond the audible range, i.e. in the ultrasound range.

The present invention offers a solution for capturing the acoustic and vibratory emissions of watches, with the ability to obtain a signal-to-noise ratio of at least 30 dB over the entire extended frequency band and, for example, broken down into four octaves of interest, typically 5-10 kHz, 10-20 kHz, 20-40 kHz, 40-80 kHz (or even wider in some cases), in a way that is easily compatible with a production line environment. The solution therefore enables very high-fidelity, very broad-spectrum, high-spectral-planarity reconstruction of all the potential acoustic or vibratory emissions from a watch. Since the quality of signal processing algorithms is directly linked to the entropy of a sampled signal (quantity of information), or to the product B x T, i.e. the product of the bandwidth B and the integration time T, this sound capture technique makes it possible to use all signal processing techniques for weak impulsive, tonal, multi-tonal and broadband signals.

These qualities of the invention make it possible to overcome the current lack of acoustic or vibratory control capability of particular watches on the production line, in that they open up more extensive control and diagnostic possibilities:
- In the current state of the art, it is not possible to automatically detect deep operating faults in the regulating components, such as an exhaust wheel fault or a lubrication fault, due to the lack of sharpness of the detection of the release-impulse-jump shock train. In fact, with current methods compatible with automatic production line control, the best signal-to-noise ratios obtainable, the extension of the length of the vibratory impulse responses of parts along the transmission path between the noise source (native shocks) and the probing point, and finally, the intrinsic non-linearity (resonance), are three factors that add up to irreducible blurring and residual bias in the signal collected, whatever the signal processing capabilities deployed downstream (analogy with telescopes or microscopes, when the native resolution required reaches the noise limits of the sensors themselves).
- With the current state of the art, it is not possible to qualify complicated movements such as - for example - those with multiple oscillators. For these types of auscultation, it is necessary to obtain signals with a very high temporal discrimination capacity, a high signal-to-noise ratio and, if necessary, focusing by means of a tuning device to enable extraction and unambiguous discrimination of multiple and interleaved shock trains, and selectivity according to the different noise sources present.
- Furthermore, more generally in terms of characterising the acoustic behaviour of watches obtained in this way, certain specialisations, such as analysing the sonority of the functions of timepieces with striking complications, alarm functions, or other functions linked to the qualitative sensory perception of watches, watches with very low acoustic or vibratory emissions, or even the analysis of certain defects (e.g. analysis of rotating bezel noise, analysis of date jump operation, etc.), are quickly biased or limited when they are carried out using resonant probes with a limited frequency band, or with self-noise or too high environment for non-contact methods).

By the very nature of the new quality of capture of the acoustic or vibratory signature of watches, i.e. very high sensitivity, very low noise capture, over a range of frequencies covering the entire range of possible emission frequencies of the sources of noise and internal vibration of the watch, and this in a synchronous manner over a mesh of points of a global envelope of an object to be examined, the invention opens up the possibility, in particular through the use of signal processing techniques by coherence extraction, transfer functions, or by long-term measurements, of a qualification of the authentic acoustic or vibratory signature of a watch, i.e. a capability for traceability and automatic recognition of a part (watch-fingerprint).

Similarly, and for identical reasons, this solution makes the methods used to qualify the stability of the isochronism of watches even more effective and robust, in particular the adaptive methods, which require extremely rapid feedback from an external motorisation of the part.

By further application to the case of watch inspection, in particular through the use of near-field acoustic echography techniques, which include the possibility of modifying the acoustic radiation impedance of the source, and require the use of non-linear filtering techniques (application of phase rotations as a function of frequency, and not just a group delay as in free-field), the invention also provides the instrumental and algorithmic requirements needed to enable antenna focusing localised in a certain part of the watch, and even the ability to automatically scan the focal point.

Lastly, the entire method described is also applicable with the use of liquid or gel contact between the object to be measured and the measurement transducers, in this case replacing the microphones with hydrophones, this variant of the invention making it possible on the one hand to create an improved acoustic impedance matching condition between the external faces of the object to be measured and the sensitive part of the transducers, and on the other hand to envisage industrial measurement methods in partially or totally immersed mode.

That is, the invention consists of an acoustic and ultrasonic palpation of the watch, carried out through a pressure micro-cavity applied against one face of the object to be measured, and incorporating an array of miniature digital audio and ultrasonic microphones - for example from 4 to 32 MEMS microphones (or hydrophones) - matched in amplitude and phase, whose acoustic ports are spatially distributed like a planar antenna inside the cavity (or in as many micro-cavities as there are acoustic ports formed by the microphone bearing against the surface to be measured), and whose signals are processed individually and/or aggregated by a near-field acoustic antenna algorithm.

In short, the invention provides a solution for very high-fidelity, very broad-spectrum, very low-noise, high-spatial-resolution frequency and time auscultation in a way that can be easily adapted for all laboratory, development, production and after-sales service requirements for all types of watch.

That is, an aim of the present invention is to obtain a good spectral flatness. Usually, in prior art with resonant sensors, a Notch filter is used to obtain fairly flat or monotonous background noise. In the present invention, it is possible to use MEMS sensors, preferably with a flat response for the signal detected, in the arrangement of the present invention in order to obtain a good spectral flatness, which is a desired result for a good measurement of the mechanical watch, which avoids using a Notch filter or other filter which flattens the signal and loose information present in this signal.

MEMS-based microphones have a flat response because the MEMS 'rejects' resonance towards the top of the frequency spectrum, even for small components that resonates at very high frequencies (typically above 40 kHz).

In fact, one can check that the MEMS sensor response is flat on a reference signal or a known case, and then there is little or no correction to make, so that it is possible to keep all the useful signal.

The invention is defined by the independent claims and has been developed to overcome at least one of the issues identified above. The dependent claims comprise further features defining further advantageous embodiments.

An embodiment can therefore relate to a watchmaking measuring device for measuring sound generated by an object being a mechanical watch, the watchmaking measuring device comprising: a supporting surface, a plurality of microphones placed on the supporting surface, a controller connected to the plurality of microphones, wherein the controller is configured to process the output of the plurality of microphones so as to obtain one or more signals representative of the sound generated by the mechanical watch.

In some embodiments, the plurality of microphones can be matched in phase and amplitude.

In some embodiments, the plurality of microphones can be configured to have an amplitude mismatch lower than 3 dB, preferably lower than 2 dB, even more preferably lower than 1 dB, and/or the plurality of microphones can be configured to have a phase mismatch lower than 10°, preferably lower than 5°, even more preferably lower than 1°.

In some embodiments, the plurality of microphones can be MEMS-based microphones.

In some embodiments, the plurality of microphones can be separated from each other by an intra-microphone distance, the intra-microphone distance can be lower than 1/2 of a smallest wavelength to be measured by the watchmaking measuring device, preferably lower than 1/4 of the smallest wavelength, even more preferably lower than 1/8 of the smallest wavelength.

In some embodiments, the plurality of microphones together can cover a total distance, the total distance can be lower than a smallest wavelength to be measured by the watchmaking measuring device, preferably lower than 1/2 of the smallest wavelength.

In some embodiments, the plurality of microphones together can cover a total distance, the total distance can be lower than 10cm, preferably lower than 5cm, even more preferably lower than lower than 3cm.

In some embodiments, the plurality of microphones can comprise at least 4 microphones, preferably at least 16 microphones, even more preferably at least 32 microphones.

In some embodiments, the plurality of microphones can implement an acoustic antenna.

In some embodiments, the plurality of microphones can comprise at least 2, preferably at least 4, microphones, or at least 2, preferably at least 4, groups of microphones, wherein different microphones, or different groups of microphones, can be configured to measure sounds on different frequency ranges.

In some embodiments, at least two of the different frequency ranges can be contiguous.

In some embodiments, the different frequency ranges can have respective bandwidths, and for frequency ranges which are contiguous, the bandwidth or the higher frequency range can be double the bandwidth or the lower frequency range.

In some embodiments, the different frequency ranges can be each defined by a respective minimum frequency value and maximum frequency value, and a ratio of the maximum frequency value over the minimum frequency can be at least 1.1, preferably at least 1.2, even more preferably at least 1.5, and/or the ratio of the maximum frequency value over the minimum frequency can be at most 4, preferably at most 3, even more preferably at most 2.

In some embodiments, different frequency ranges can be higher than 5kHz, preferably higher than 2 kHz, even more preferably higher than 500Hz, and/or lower than 80 kHz, preferably lower than 120 kHz, even more preferably lower than 200 kHz.

In some embodiments, frequency ranges can be preferably 500 Hz to 200 kHz, preferably between 20 kHz and 50 kHz, preferably above 50 kHz, preferably above 100 kHz and preferably above 200 kHz. That is, high frequency (preferably between 20 kHz and 50 kHz, preferably more than 50 kHz, preferably more than 100 kHz, preferably more than 200 kHz) are not very present in the mechanical watch because propagation in the mechanical watch is weak for these frequencies. There is an interest in recovering them because they contain relevant information. To do this, it is necessary to be nearby the watch because of the low propagation (that is, to have a near-field measurement). With the flexible supporting surface of the present invention, which conforms to the shape of the watch (case back or glass), for example with the microphones mounted on a flexible petal shape PCB, there is a high improvement with respect to the prior art. The fact that the microphones according to the present invention are contactless is a decisive advantage for reproducibility. A microphone is different from a piezo resonant vibration sensor. If one presses the object to be measured against the sensor of the prior art, there will be no pick-up sound by air. There are differences between resonant pick-up (i.e solid-state transmission) sensor and airborne microphones. In watchmaking, the problem of reproducibility and broadband sensitivity comes from the choice of this type of microphone. If the measuring operator listen in contact, he will face a problem of reproducibility/repeatability from one measurement to the next, particularly if, for example, he put the watch down and put it back on the same measuring tool: he will get two different measurements. This may actually depend on the quality of the contact (for example, whether the contact is pressed hard or lightly): this also shifts the resonance peak in frequency, at least slightly. With the flexible supporting surface of the present invention along with the overlapped opening, the problem is solved.

The time stamping of major event (e.g. impulsion) is not so much altered by this lack of reproducibility, but the subtle information carried by the actual shape of the vibration burst is altered, preventing any useful analyze of the raw transient signal pattern to be carried out.

In some embodiments, a plurality of, preferably a majority of, the plurality of microphones, preferably all of them, can be capable of measuring sound in a same bandwidth, the different frequency ranges can be defined by respective different bandpass filters, which can be configured to act on the output of the microphones.

In some embodiments, the controller can be configured to apply signal processing to output signals of the plurality of microphones so as to reduce noise common to the output signals.

In some embodiments, each of the plurality of microphones can have a self-noise level which can be higher than a minimum sound to be measured from the mechanical watch.

In some embodiments, the supporting surface can comprise, or can be, a printed circuit board, to which the plurality of microphones can be electrically connected.

In some embodiments, the plurality of microphones can be placed on a side of the supporting surface facing the mechanical watch.

In some embodiments, the supporting surface can have a plurality of openings, each of the plurality of microphones can comprise a sound-inlet opening, the plurality of microphones can be assembled on the supporting surface so that the plurality of microphones closes the plurality of openings, and so that the plurality of sound-inlet openings faces the plurality of openings.

In some embodiments, the watchmaking measuring device can be configured so that, in use, a measuring distance between any of the plurality of microphones and the mechanical watch can be less than 2 cm, preferably less than 1 cm, even more preferably less than 5mm.

In some embodiments, the device can be configured so that the mechanical watch can be held at said measuring distance without additional support.

In some embodiments, the device can further comprise a housing configured to define a volume, and the housing can comprise, or can be connected to, the supporting surface. The plurality of microphones can be placed inside of the volume, and the supporting surface can comprise at least one opening and the housing can be configured to support the mechanical watch so that the mechanical watch, during measurement, overlaps with the at least one opening.

In some embodiments, the supporting surface can comprise a plurality of openings, each of the plurality of openings can have an area comprised between 0.5mm² and 50mm², preferably between 0.5mm² and 25mm², even more preferably between 0.5mm² and 5mm².

In some embodiments, the device can further comprise a noise-reducing seal or a soft surface coating preferably acting as noise-reducing seal, wherein the noise-reducing seal can be configured to limit environmental noise from reaching the plurality of microphones.

In some embodiments, the noise-reducing seal can have shape complementary to at least part of a shape of the mechanical watch.

In some embodiments, the supporting surface can be flexible and configured to conform to a surface of the mechanical watch.

In some embodiments, in use, a volume comprised between the mechanical watch and a majority, preferably all, of the plurality of microphones can be filled by a liquid and/or by a gel.

In some embodiments, the watchmaking measuring device can be configured so that, in use, a volume between any of the plurality of microphones and the mechanical watch can be less than 2 cm³, preferably less than 1 cm³, even more preferably less than 10 mm³.

In some embodiments, the mechanical watch can be a clockwork mechanism or a mechanical watch.

A further embodiment of the invention can relate to a method for measuring sound generated by a mechanical watch, the method comprising: arranging a plurality of microphones on a supporting surface of a watchmaking measuring device, providing a controller connected to the plurality of microphones, configuring the controller to combine the output of the plurality of microphones, measuring sounds generated by the mechanical watch by means of the plurality of microphones.

In some embodiments, the method can further comprise filling with a liquid and/or a gel at least a volume comprised between the mechanical watch and any one of a majority, preferably all, of the plurality of microphones.

In some embodiments the method can further comprise positioning the mechanical watch at a measuring distance from the plurality of microphones which can be less than 1 cm, preferably less than 0.5 cm, even more preferably less than 1mm.

In some embodiments the method the watchmaking measuring device of the method can be any of the watchmaking measuring devices described above and more generally through the entire description.

It is possible to incorporate to the watchmaking measuring device an array of microphone transducers of the same characteristics, comprising for example 2, 4, 8, 16 or 32 units arranged circularly or in square or rectangular patterns or of another acoustic access typology on a thin, rigid or flexible electronic circuit board and in such a way as to correspond to an acoustic antenna arrangement for the focused, near-field, very low noise and wide spectral band auscultation of a watch by one of its external faces.

It is possible to incorporate to the watchmaking measuring device signal conditioning and acquisition electronics and a signal processing algorithm comprising the signal processing functions of the plurality of signals, either processed independently, or processed together by the implementation of coherent reconstruction, time shift, convolution, filtering and focusing techniques, that is to say more precisely all the signal processing methods and algorithms of acoustic antennae by microphone arrays and applicable in the near field.

It is possible to implement the present invention in a two-headed manner, i.e. gripping on either side of two faces of the part / watch to be qualified, and allowing in particular synchronous responses and vibroacoustic transfer functions to be obtained.

It is possible to couple the watchmaking measuring device to an emission transducer or a dynamic exciter driven in a synchronous manner and allowing the synchronous emission and acquisition of responses to excitations.

The one or plurality of the acoustic ports may be placed in direct contact with the face of the part / watch to be examined.

The internal walls of the acoustic contact cavity are acoustically absorbent or, in another case, acoustically reflective.

Further, it is possible to perform the measurement under controlled environmental conditions (e.g. temperature, humidity, magnetism, pressure, etc.).

### Brief description of drawings

Figure 1A schematically illustrates functional components of watchmaking measuring device 1000;
Figure 1B schematically illustrates a top view of watchmaking measuring device 1000;
Figure 1C schematically illustrates a cross section of a watchmaking measuring device 1000, taken along line C-C' of figure 1B;
Figure 1D schematically illustrates an enlarged cross section of a watchmaking measuring device 1000D, comprising microphones 1200D;
Figure 1E schematically illustrates an enlarged cross section of a watchmaking measuring device 1000E, comprising openings 1110;
Figure 2A schematically illustrates a cross section of a watchmaking measuring device 2000, taken along line A-A' of figure 2B;
Figure 2B schematically illustrates a bottom view of a watchmaking measuring device 2000, cut open along line B-B' of figure 2A;
Figures 2C-2E schematically illustrate cross sections of watchmaking measuring devices 2000C-2000E, taken along line A-A' of figure 2B, which show alternative possible placements of the microphones 1200;
Figure 2F schematically illustrate a cross section of a watchmaking measuring device 2000F, taken along line A-A' of figure 2B, which shows an alternative possible size of the opening 1110;
Figures 2G-2H schematically illustrate bottom views of watchmaking measuring devices 2000G-2000H, cut open along line B-B' of figure 2A, which show alternative possible placements of the microphones 1200 and/or of the openings 1110;
Figure 3A schematically illustrates a cross section of a watchmaking measuring device 3000, taken along line A-A' of figure 3B;
Figure 3B schematically illustrates a top view of a watchmaking measuring device 3000;
Figure 3C schematically illustrates a cross section of a watchmaking measuring device 3000C;
Figure 3D schematically illustrates a cross section of a watchmaking measuring device 3000D;
Figure 4 schematically illustrates a cross section of a watchmaking measuring device 3000D;
Figure 5 schematically illustrates a top view of the watchmaking measuring device 4000;
Figure 6 shows performance comparison between the prior art and the present invention about waveform during time passing;
Figure 7 shows performance comparison between the prior art and the present invention about spectrum and signal to noise ration with respect to frequency;
Figure 8 shows performance comparison between the prior art and the present invention about waveform envelop of a single transient signal during time passing;
Figure 9 shows performance comparison between the prior art and the present invention about spectrum of the single transient signal with respect to frequency;
Figure 10 shows performance comparison between the prior art and the present invention about SNR;
Figure 11 shows performance comparison between the prior art and the present invention about SNR and global gain;

### Detailed description of embodiments

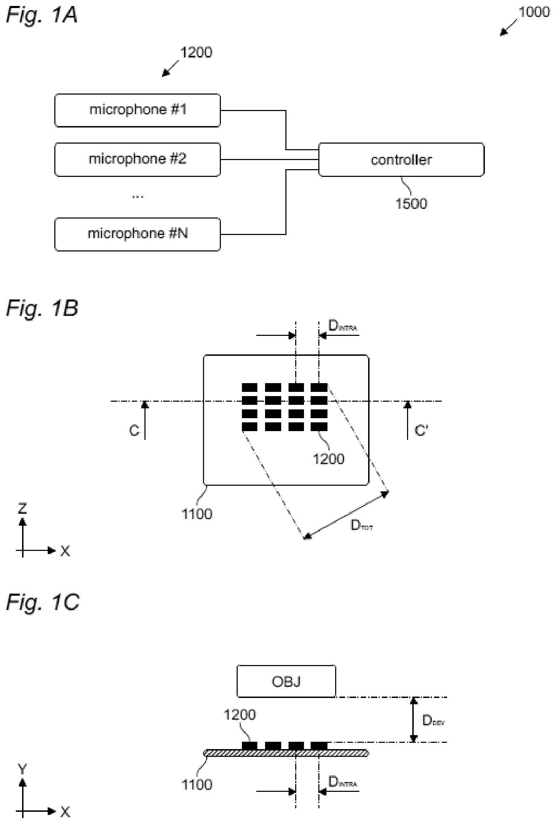

Figure 1A schematically illustrates functional components of a watchmaking measuring device 1000 while figure 1B schematically illustrates a top view of the watchmaking measuring device 1000. In figure 1C, a cross section of watchmaking measuring device 1000 is also schematically illustrated, which is taken along line C-C' of figure 1B.

The watchmaking measuring device 1000 is generally for measuring sound generated by an object OBJ being a mechanical watch W. The object can generally be any object, preferably a small object such as a watch W, a clockwork mechanism CM of a watch W, a pen, a jewelry item, or similarly sized objects, thus generally speaking, handheld objects. In the present invention, the object OBJ is a mechanical watch W. The watchmaking measuring device is also called simply measuring device.

As visible in figure 1B, the watchmaking measuring device comprises a supporting surface 1100. In the following description, various possible characteristics and embodiments of the supporting surface 1100 will be provided. In general, however, the supporting surface 1100 will be understood to be implementable by generally any surface, which can support a plurality of microphones. For instance, the supporting surface could be implemented by a plastic layer, a metallic sheet, a printed circuit board, a flexible sheet or generally any material which allows a plurality of microphones to be firmly held in place.

The watchmaking measuring device further comprises a plurality of microphones 1200 placed on the supporting surface 1100. In the following examples and embodiments, further details will be provided on the plurality of microphones 1200. In general, the microphones 1200 are implemented with small dimensions, preferably each microphone 1200 is smaller than 15mm² so that the present invention is not to be construed to be implemented by a plurality of larger, hand-held or measuring microphones such as ½" (half-inch) or ¼" (quarter-inch) electret microphones or probes commonly used in the noise & vibration industry.

The measuring device further comprises a controller 1500 connected to the plurality of microphones 1200. The controller can be advantageously positioned and held in place by the supporting surface 1100, although this is not mandatory. The controller 1500 is configured to process the output of the plurality of microphones 1200 so as to obtain a one or more signals representative of the sound generated by the object OBJ.

That is, the output signals of the plurality of microphones 1200 undergoes a signal processing operated by the controller 1500 so that the output of the controller 1500 is a signal which is representative of the sound generated by the object in which is a function of the signals output by the plurality of microphones 1200.

For instance, some of the plurality of microphones 1200 might be configured to operate in a first frequency range, for instance 500 Hz to 1 kHz, while others of the plurality of microphones might be configured to operate in a second frequency range, for instance 1 kHz to 2 kHz, while further others of the plurality of microphones might be configured to operate in a third frequency range, for instance 2kHz to 4 kHz, still further others of the plurality of microphones might be configured to operate in a fourth frequency range, for instance 4 kHz to 8 kHz, still further others of the plurality of microphones might be configured to operate in a fifth frequency range, for instance 8 kHz to 16 kHz, still further others of the plurality of microphones might be configured to operate in a sixth frequency range, for instance 16 kHz to 32 kHz etc. In this exemplary configuration, the various signals output by the microphones can be combined such that the signal output by the controller is then representative of the sound generated by the object OBJ in the frequency range from 500 Hz to 32 kHz. It will be clear that this numerical example is not limiting the invention but is intended to be an example of a possible implementation in which different frequency ranges are covered by different microphones, and preferably so that the various frequency ranges are contiguous and each having twice the bandwidth of the previous one.

Alternatively, or additionally, at least two, preferably at least three, even more preferably at least four of the plurality of microphones 1200 might be configured to operate in the same frequency range, for instance 500 Hz to 1kHz, and their output might be combined through signal processing which takes advantage of the fact that the plurality of microphones are listening to the same sound in the same frequency range and uses their output signals to remove noise common to the output signals, and improve signal to noise ratio.

In some preferred embodiments, the plurality of microphones 1200 are matched in phase and amplitude. This is particularly advantageous as it allows signal processing to combine the output of the various microphones in a reliable manner, for instance to increase bandwidth of the measured signal or to allow signal processing which increases signal-to-noise ratio.

In both exemplary cases described above, the combination could be also achieved without a plurality of microphones which are matched in phase and/or amplitude. However, this would require complex signal processing since the signals would have first to be matched in phase and amplitude and only then they could be combined. It will be cleared to those skilled in the art that the phase and amplitude matching can be achieved by the controller 1500. That is, the plurality of microphones 1200 and the controller 1500 can form a system which allows the plurality of microphones to be managed in phase and amplitude through signal processing and/or configuration by the controller 1500.

In preferred implementations, the plurality of microphones can be configured to have an amplitude mismatch lower than 3 dB, preferably lower than 2 dB, even more preferably lower than 1 dB, and/or a phase mismatch lower than 10°, preferably lower than 5°, even more preferably lower than 1°. The inventors have found that those values enable a correct combination of the output of the plurality of microphones while also being available in commercially available systems.

In the description above, it has been generally indicated that the plurality of microphones are generally small. This can be achieved, for instance, when the plurality of microphones 1200 are MEMS-based microphones. As it will be clear to those skilled in the art, a MEMS-based microphone can be understood as a microphone which has a sensing element which is implemented using Micro Electronic Mechanical Systems technologies. This kind of technology is particularly advantageous as it allows the microphones to be quite small, so that a relatively high number of microphones can be placed next to each other.

The placement of the microphones close next to each other is not only convenient so that the measuring device has a compact size, but it also allows the measuring device to operate correctly as a near-field measuring device. As those skilled in the art now, near-field measurement differs from far-field measurement in several aspects. A relevant one is that near-field measurement can bring a spatial scanning of a plurality of acoustic immissions and/or avoid destructive wavelength combination. By acoustic immission, as will be clear to those skilled in the art, it is meant the sound received by the microphone, as opposed to the emission being the sound emitted.

More specifically, if two microphones are placed at a distance corresponding to half of wavelength, the combination of the output of the two microphones will always be equal to zero and thus prevent the signal from being sampled correctly. At the end exemplary frequency of 10 kHz, the wavelength in air is about 34 mm so that if small microphones, with dimensions in the range of single digit millimeters, are placed close to each other they can advantageously avoid such destructive combinations. Even more preferably when considering the wavelength not in air but the wavelength of the structure-borne conduction in the structural body of the object to be measured, so a celerity of typically ten times faster than in air, the dimensions in the range of single digit millimeters and placed close to each other still even more advantageously avoid destructive combinations.

In some preferred embodiments, the plurality of microphones 1200 is thus separated from each other by an intra-microphone distance D_{INTRA}, as visible, for instance, in figure 1B and figure 1C. The intra-microphone distance D_{INTRA} is preferably lower than 1/2 of a smallest wavelength to be measured by the measuring device, preferably lower than 1/4 of the smallest wavelength, even more preferably lower than 1/8 of the smallest wavelength. The intra-microphone distance D_{INTRA} can be understood as being a distance between the sound-inlet openings of the microphones, such as, for instance, sound-inlet openings 1210 schematically illustrated in fig-ure 1D.

Preferably, the intra-microphone distance D_{INTRA} is measured between any two neighboring microphones of the plurality of microphones 1200. However, in some embodiments, the intra-microphone distance D_{INTRA} might be measured between any two microphones of a given group of microphones of the plurality of microphones 1200 and not between any two microphones chosen at random between the plurality of microphones 1200. The group of microphones can be defined to comprise microphones which operate in the same frequency range.

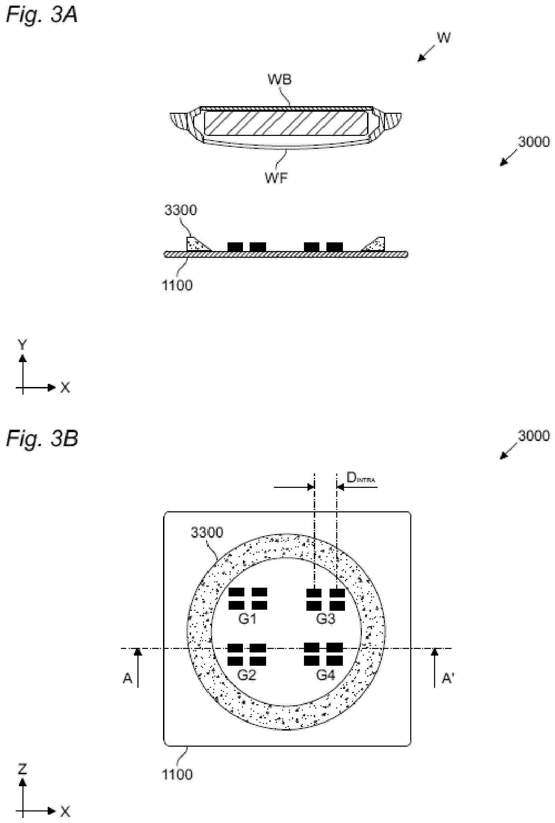

An example of placement of the plurality of microphones 1200 into a plurality of groups G1-G4 is illustrated in figures 3A and 3B. In the exemplary illustrated embodiment, the group G1 can comprise microphones operating in a first frequency range, group G2 can comprise microphone operating in a second frequency range, group G3 can comprise microphones operating in a third frequency range and group G4 can comprise microphones operating in a fourth frequency range.

In this exemplary implementation, by maintaining a maximum intra-microphone distance D_{INTRA} as defined above between two microphones of a given group operating in the same frequency, it can be ensured that the microphones in that group do not experience destructive wavelength interference.

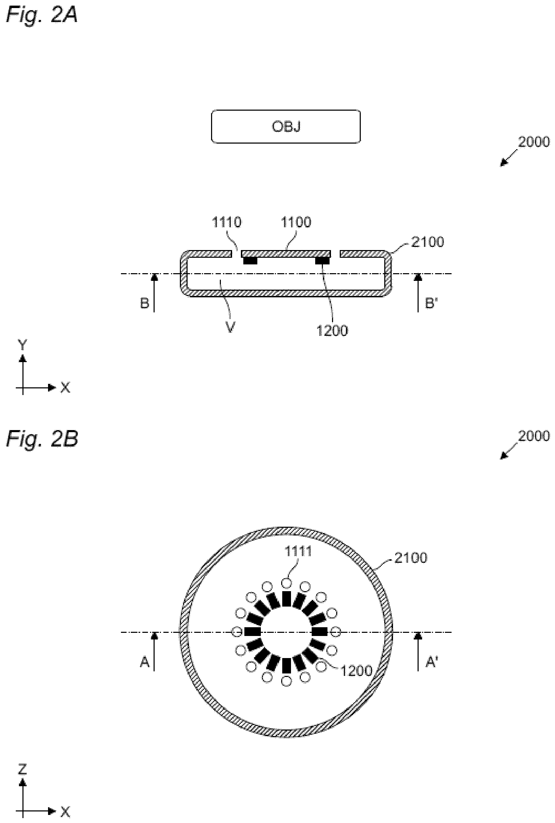

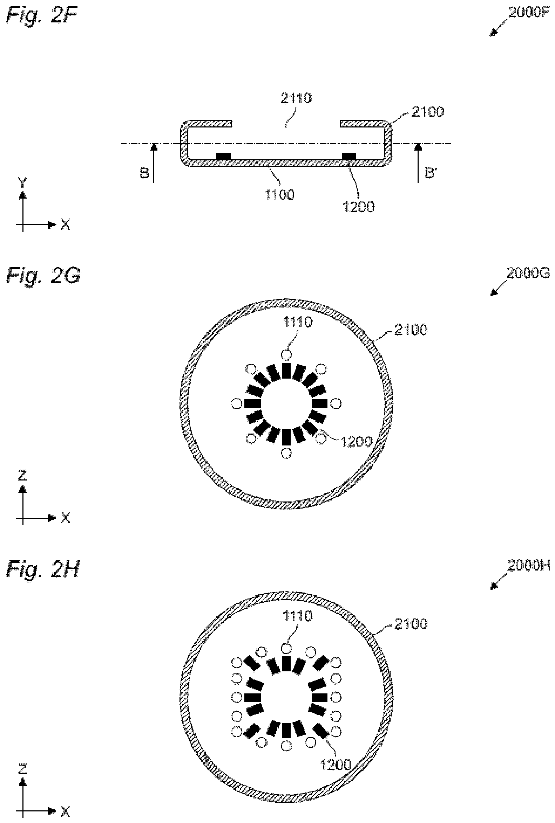

Still alternatively, or additionally, as visible for instance in figure 2B, the plurality of microphones can be placed such that the maximum intra-microphone distance D_{INTRA} as defined above is maintained between any two neighboring microphones, that is between any microphone and the microphone closest to it, even though two microphones chosen at random in the plurality of microphones may be placed at a distance higher than the maximum intra-microphone distance D_{INTRA}. Also in this case, at least the two neighboring microphones can be ensured to operate without destructive wavelength interference.

Additionally, in some preferred embodiments, the plurality of microphones 1200 together cover a total distance D_{TOT}, the total distance D_{TOT} being lower than a smallest wavelength to be measured by the measuring device, preferably lower than 1/2 of the smallest wavelength. Alternatively, or in addition, the total distance D_{TOT} can be lower than 10cm, preferably lower than 5cm, even more preferably lower than lower than 3cm.

As illustrated for instance in figure 1B, the total distance D_{TOT} can be defined as the largest distance covered by the plurality of microphones 1200. There are several advantages from concentrating the plurality of microphones in a small region. The measuring device is more compact. Moreover, it can be ensured that the sound generated by the object reaches all microphones with a comparable amplitude. Furthermore, concentrating the microphones in a smaller region makes it simpler to measure a local source effect in the object and to isolate this smaller region from environmental noise.

In the embodiments described so far, it has not been specified how many microphones can form part of the plurality of microphones. In general, increasing the number of microphones makes it possible to associate more than one microphone to a given bandwidth to be measured, thus increasing the signal-to-noise ratio by combining the coherent output signals of those microphones. Alternatively, or in addition, by increasing the number of microphones it is possible to subdivide the bandwidth of the sounds to be measured into a plurality of smaller bandwidth and associate one or more of microphones to each of the smaller bandwidths. In preferred embodiments, the plurality of microphones 1200 comprises at least 4 microphones, preferably at least 16 microphones, even more preferably at least 32 microphones.

In preferred embodiments the plurality of microphones 1200 can be configured to implement an acoustic antenna. As will be clear to those skilled in the art, an acoustic antenna can be understood as a device comprising an array of microphones that is used to detect sound waves from a particular direction. An acoustic antenna typically consists of a plurality of microphones arranged in a predetermined pattern. The signals from these microphones, combined with the knowledge of the positions of the microphones, can be processed to determine from which direction a sound wave is originated.

This is particularly advantageous in applications in which it is not only useful to measure the sound of generated from the object but also to know from which part of the object the song has been generated. For instance, when the object to be measured is a watch, if any mechanical noise indicating of an unwanted friction is measured, it is interesting for the testing purposes of the watch to determine the location of such unwanted friction.

In this respect it is to be noted that the predetermined pattern of the microphones can be various and the positioning of the microphones 1200 is not limited to the one illustrated in figure 1B, where they are placed in a substantially array configuration. As possible alternatives, for instance as being illustrated in figure 2B, the microphones 1200 can be placed with a circular pattern or, for instance as illustrated in figure 3B, the microphones 1200 can be placed as groups G1-G4. Still further, as visible for instance in figure 2H, the plurality of microphones can be placed with various nonuniform patterns.

In the embodiments described so far, it has been described that the bandwidth of the sound generated by the object can be divided in a plurality of smaller bandwidths and each of the smaller bandwidth can be measured by one or more of the plurality of microphones 1200. In preferred embodiments, the plurality of microphones 1200 can therefore comprise at least 2, preferably at least 4, microphones 1200 and/or or at least 2, preferably at least 4, groups G1-G4 of microphones, each group comprising one or more microphones. Different microphones, or different groups of microphones, can then be configured to measure sounds on different frequency ranges.

Thanks to this implementation the output of the microphones, or groups, can be combined to increase the bandwidth which is measured.

This is particularly useful when operating in near-field conditions. That is so because the sound transmission at different wavelengths is different, in near-field conditions, as a function of the wavelength. By having different microphones operating on different ranges of wavelengths, it can be assumed that, within that specific range, the physical phenomena are similar. This allows the execution of signal processing on that range which is specific to that range. The processed output of different ranges can then be combines afterwards, to obtain a signal representative of the sounds in a larger bandwidth.

The present invention is generally not limited in how the larger bandwidth is subdivided in a plurality of smaller frequency ranges. In particular, the number and the size of these smaller frequency ranges can be selected depending on the specific implementation and on the characteristics of the microphones 1200.

Nevertheless, in some preferred embodiments, at least two of the different frequency ranges can be configured to be contiguous. That is, for instance, one frequency range can extend from a first value to a second value and another frequency range can extend from the second value to a third value. Preferably, a majority of the different frequency ranges, even more preferably all of them, can be configured to be contiguous. In this manner, it can be advantageously ensured that no gaps are present in the measurement while also ensuring that the same frequency is not sampled more than once which might result in unnecessary redundancy.

Alternatively, or additionally, the different frequency ranges can be configured to each be twice as large as the smaller contiguous frequency range. In other words, the frequency ranges have respective bandwidths, and for frequency ranges which are contiguous, the bandwidth or the higher frequency range is double the bandwidth or the lower frequency range. For instance, if a first frequency range has a bandwidth of 5 kHz, for instance from 5 kHz to 10 kHz, the subsequent higher frequency range can have a bandwidth of 10 kHz, for instance from 10 kHz to 20 kHz, and the further subsequent frequency range can have a bandwidth of 20 kHz, for instance from 20 kHz to 40 kHz.

The inventors have found this to be particularly advantageous because it has been found that when the ratio of the maximum, of a given frequency range, over the minimum, of the same frequency range, is at most a factor 2, signal processing of the output of the microphones operating in that frequency range can be particularly effective. This is due to the fact that it can be assumed that the physical phenomena within those values are similar enough for applying the same signal processing to them. More generally, the different frequency ranges can each be defined by a respective minimum frequency value and maximum frequency value, and a ratio of the maximum frequency value over the minimum frequency can be at least 1.1, preferably at least 1.2, even more preferably at least 1.5, and/or the ratio of the maximum frequency value over the minimum frequency can be at most 4, preferably at most 3, even more preferably at most 2.

In the embodiments described so far, no specific limitations have been provided for the numerical value of the frequencies to be measured, as it is clear that those will be depending on the specific implementation and on frequencies of interest of the sounds to be made. Nevertheless, some general considerations can be made the, and, in preferred embodiments, the different frequency ranges can be preferably higher than 5 kHz, preferably higher than 2 kHz, even more preferably higher than 500 Hz, and/or lower than 80 kHz, preferably between lower than 120 kHz, even more preferably lower than 200 kHz.

In particular, the inventors have found that those numerical values are particularly well-suited for the measurement of sounds generated by mechanical watches. More specifically, it has been found that the amount of information carried by sounds having frequencies lower than 500 Hz is quite limited, while the amount of environmental noise in that frequency region has been found to be quite significant. Conversely, it has been found that the amount of information carried by sounds having frequency higher than 200kHz is negligible. Similar conclusions have been reached for the preferred more limiting values, which have been found to be particularly advantageous in practical implementations.

In several of embodiments described so far it has been indicated that the sounds can be measured over a certain bandwidth while one or more of the microphones can operate in a frequency range which is more than said bandwidth. For instance, even though a microphone can measure in the bandwidth 500 Hz to 200 kHz, it might be used for measuring sounds in a narrower bandwidth only, such as 500 Hz to 1 kHz. It will be clear to those skilled in the arts that this can be implemented in a plurality of manner.

In particular, a microphone configured to operate in a given frequency range can be selected to have measuring characteristics adapted to that frequency range. For instance, assuming as an example that the complete measuring bandwidth is 5 kHz to 80 kHz, and assuming as an example that this is divided into two ranges, for instance 5 kHz to 40 kHz and 40 kHz to 80 kHz, a microphone which is better suited at measuring in the range of 5 kHz to 40 kHz can be used for this range while a different microphone, which is better suited as measuring in the range from 40 kHz to 80 kHz, can be used in this range. That is, different microphones can be used for different frequency ranges.

Alternatively, or in addition, a plurality of, preferably a majority of, the plurality of microphones 1200, preferably all of them, can be capable of measuring sound in the same bandwidth, and the different frequency ranges can be defined by respective different bandpass filters, which are configured to act on the output of the microphones 1200.

For instance, by making reference to the same numerical example as above, both microphones can be capable of measuring from 5 kHz to 80 kHz and both microphones can be configured to do so, while their output can then be filtered differently. In particular, the output of one or more of the microphones can be filtered by a bandpass filter configured to allow frequencies between 5 kHz and 40 kHz and the output of one or more of the remaining microphones can be filtered by a bandpass filter configured to allow frequencies between 40 kHz and 80 kHz.

This implementation has been found to be particularly advantageous as it allows using the same microphones, which in turn simplifies manufacturing and design, while the different filters simplify the definition of the frequency ranges, since filters can be more freely configured than the microphones.

In some of the embodiments described above, it has been indicated that one of the advantages achieved by the invention is the improvement of the signal-to-noise ratio by measuring coherent signals through a plurality of microphones 1200. Those skilled in the art are aware of a plurality of algorithms which allow a coherent signal measured by a plurality of transducers to be cleaned from noise based on the output of the plurality of the transducers. In general, the controller 1500 can then be configured to apply any such algorithm and in particular any signal processing to output signals of the plurality of microphones 1200 so as to reduce noise common to the output signals.

In this manner, the combination of the microphones allows signal processing which makes their combination to have a lower noise rating, and/or a higher sensitivity, than a single microphone. While the various algorithms to reduce noise might be - per se - known, the members have found that their application to the specific measuring device of the invention is not known from the prior art.

By using such algorithms it is not possible to use microphones which, at the single microphone level, might be incapable of measuring the sound characteristics which they can instead measure when their output is combined. In other words, each of the plurality of microphones 1200 can have a self-noise level which is higher than a minimum sound to be measured from the object OBJ. When the output of the plurality of microphones 1200 is combined, the combined noise level might be lower than the minimum sound to be measured so as to allow the correct detection of sounds from the object.

This is particularly advantageous as it allows to use microphones which are commercially available and which, at the single microphone level, might not have characteristics which are insufficient for measuring objects emitting noise with very low amplitudes, such as the level of noises emitted by a mechanical watch. In particular, such microphones can be cheaper than more specialized microphones and, when combined together, the combination can still be cheaper than the more specialized microphone while nevertheless obtaining a broader band and an increased signal to noise ratio.

In the embodiments described above, the supporting surface 1100 has been generally described as a mechanical element which allows the plurality of microphones 1200 be supported on it and, preferably, be firmly held in place. In preferred embodiments, the supporting surface 1100 comprises, or is, a printed circuit board, to which the plurality of microphones 1200 are electrically connected.

Moreover, in the embodiments described so far, the plurality of microphones 1200 has only been disclosed as generally being assembled on supporting surface 1100, without specific indication on the characteristics of the microphones and their orientation.

In preferred embodiments, as visible, for instance in figure 1C, the plurality of microphones 1200 can be placed on a side of the supporting surface 1100 facing the object OBJ. This is particularly advantageous since it allows the object to be placed in near proximity to the plurality of microphones.

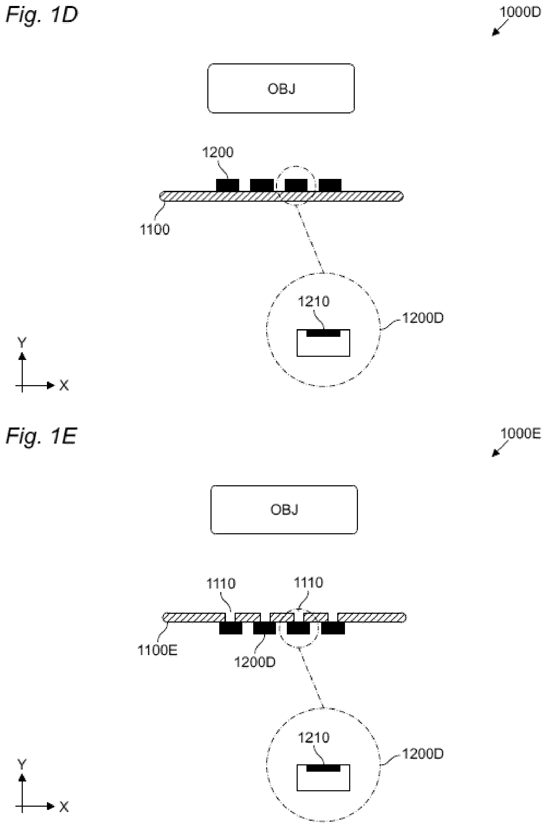

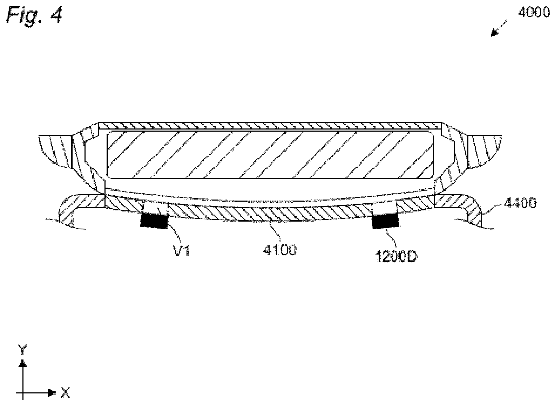

Alternatively, or in addition, as visible for instance in figure 1E or in figure 4, the supporting surface 1100 can have a plurality of openings 1110. Moreover, the plurality of microphones 1200 can be configured as illustrated in the enlarged portion of figure 1D, namely by a microphone 1200D, wherein, each of the plurality of microphones 1200D can comprise a sound-inlet opening 1210. The microphones 1200D can be implemented instead of the microphones 1200 in any of the embodiments disclosed in the application.

The sound-inlet opening can be understood as an opening in the housing of the microphone 1200D through which the majority of sound intended to reach the sensing part of the microphone 1200D can travel.

In this configuration the plurality of microphones 1200D can be assembled on the supporting surface 1100 so that the plurality of microphones 1200D closes the plurality of openings 1110, and so that the plurality of sound-inlet openings 1210 faces the plurality of openings 1110. In other words, a microphone 1200D can close an opening 1110, as well as sound-inlet opening 1210 on the side of the opening 1110. In this manner, sound from the object can travel and through the sound-inlet opening 1210 and reach the sensing part of the microphone 1200D.

This particularly advantageous combination allows the object OBJ to be positioned very close to, or even on top of, supporting surface 1110. In this manner, the object OBJ can be placed very close to the microphones 1200D. Moreover, particularly in those cases in which the object is supported by the supporting surface 1110, the object OBJ can close the openings 1100 on the side opposite to the microphones 1200D so that the amount of environmental noise reaching the sensing portion of microphones 1200D can be drastically reduced and the sound captured from the object OBJ can be very local.

It will be clear to those skilled in the art that the microphones 1200D are not to be used only in the presence of openings 1110 in the supporting surface 1100, as it is illustrated for instance in figure 1D.

It is thus clear that the various embodiments described as so far allow the object to be positioned in close proximity, or even in direct contact, with the microphones 1200. This allows the invention to operate a near-field measurement. As visible for instance in figure 1C, in preferred embodiments, the measuring device can be configured so that, in use, a measuring distance D_{DEV} between any of the plurality of microphones 1200, 1200D and the object OBJ, is less than 2 cm, preferably less than 1 cm, even more preferably less than 5mm.

In further preferred embodiments, the measuring device can be configured so that the object OBJ is held at said measuring distance D_{DEV} without additional support. It will be clear to those skilled in the art, this can be achieved by providing an appropriate frame for holding the object OBJ. Alternatively, or in addition, the supporting surface 1100 can be configured so as to hold the object in place. In preferred embodiments, the part of the measuring device holding the object in place can be shaped to have a shape complementary to at least part of the external shape of the object, such that the object OBJ can be held firmly and securely, as well as reducing the amount of environmental noise which reaches the microphone thanks to the complementarity of the supporting structure and the shape of the object OBJ.

In the embodiment of figures 1A to 1E, the microphones are supported by supporting surface 1100, which has a generally planar configuration. It will be clear to those skilled in the art that this is not necessarily the only shape that the supporting surface 1100. In particular, supporting surface 1100 can be bend, to form a non-planar housing and/or can be a part of a housing. Examples of this configuration will be described with reference to figures 2A to 2H.

Figure 2A schematically illustrates a cross section of a measuring device 2000, taken along line A-A' of figure 2B, while Figure 2B schematically illustrates a bottom view of a measuring device 2000, cut open along line B-B' of figure 2A so as to show a possible the positioning of the microphones 1200.

As it can be seen in figure 2A, the measuring device 2000 can further comprise a housing 2100 configured to define a volume V. The volume V is thus an internal volume of the housing 2100. The housing 2100 can comprise, or can be connected to, the supporting surface 1100, so that the plurality of microphones 1200 can be placed inside of the volume V.

In this configuration, in order to allow the sounds from the object OBJ, which is external to the volume V, to reach the microphones 1200, the supporting surface 1100 can comprises at least one opening 1110. Preferably, the housing 2100 can be configured to support the object OBJ so that the object OBJ, during measurement, overlaps with the at least one opening 1110.

In this manner, sound emitted from the object can travel through the opening 1100 and reach the microphones 1200 within volume V. At the same time, the amount of environmental noise reaching microphones 1200 can be reduced, since the object OBJ shields the entrance of openings 1110, by overlapping them.

In further preferred embodiments, the object OBJ can be positioned on the housing 2100 so as to close at least one of, preferably a majority of, even more preferably all of, the openings 1110. This further reduces the amount of environmental noise reaching the microphones 1200. Even more preferably, the volume V is open to the exterior only through openings 1110 such that, when those are closed by the object, the amount of environmental noise reaching the volume V can be significantly reduced.

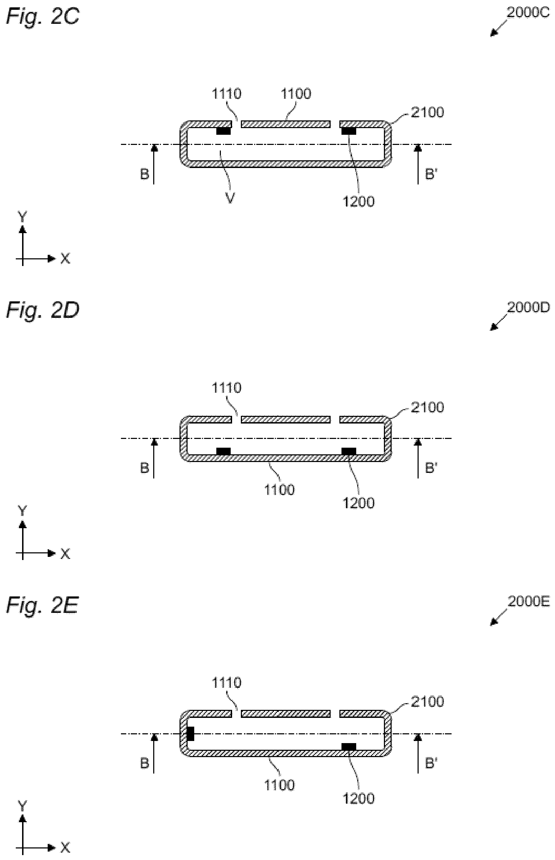

While in the embodiment illustrated in figure 2A the microphones 1200 are placed on the supporting surface 1100 which is implemented on the top of the housing 2100, the present invention is not limited thereto. This implementation is particularly advantageous in that it places the microphones 1200 as close as possible to the object OBJ. Nevertheless, alternative implementations are possible in which the microphones 1200 are placed at other locations of the housing 2100. For instance, as illustrated in figure 2D, the housing can have a top surface and a bottom surface and the microphones 1200 could be placed on the bottom surface of the housing 2100, thus acting as supporting surface 1100. Alternatively, or in addition, as illustrated in figure 2E, the microphones 1200 could be placed on vertical surfaces of the housing 2100. Moreover, as illustrated also in figure 2E, not all microphones 1200 need to be placed on the same surface of the housing 2100.

In the embodiment illustrated in figure 2A, the microphones 1200 are placed in close proximity of the openings 1110. In some embodiments, the distance between an opening 1110 and the closest respective microphone 1200 is less than 1 cm, preferably less than 3 mm, even more preferably less than 1 mm. While in the embodiment of figure 2A and 2B the microphones 1200 are placed between the openings 1100 and then, it will be clear to those skilled in the art that the alternative implementation is also possible, such as illustrated in figure 2C.

Additionally, while in the embodiment illustrated in figure 2A the number of microphones 1200 and respective openings 1110 is the same, it will be clear to those skilled in the arts that the invention is not necessarily limited thereto, and the number of microphones might differ from the number of openings. For instance, as schematically illustrated in figure 2F, as little as a single opening 2110 could be implemented.

In general, embodiments can therefore be implemented in which the supporting surface 1100 comprises a plurality of openings 1110. In further preferred embodiments, each of the plurality of openings 1110 can have an area comprised between 0.5mm² and 50mm², preferably between 0.5mm² and 25mm², even more preferably between 0.5mm² and 5mm². The inventors have in particularly found that those numerical values allow the transmission of a sufficient amount of sound from the object OBJ to be measured, while also effectively shielding the microphones from environmental noise.

In addition to the use of a closed housing 2100, or as an alternative thereto, a seal can be used to limit the amount of environmental noise reaching the microphones 1200. An example thereof is illustrated in the embodiments of figures 3A and 3B.

In particular, measuring device 3000 can further comprise a noise-reducing seal 3300. More specifically, the noise-reducing seal 3300 is configured to limit environmental noise from reaching the plurality of microphones 1200. Generally, the noise-reducing seal 3300 can be implemented with any material that has the capability of limiting sound transmission through it. As an example, foam or rubber could be used. Alternatively, or in addition, a soft surface coating can be used as noise-reducing seal. In general, a material which reduces the amount of environmental noise from reaching the plurality of microphones can be used as noise-reducing seal 3300.

In preferred embodiments, when the object OBJ is a watch, the noise-reducing seal 3300 can encircle an area of at least 50%, and/or and at most 100%, of the frontal area of the watch W. In alternative embodiments, the noise-reducing seal 3300 can encircle an area preferably higher than 4 cm², even more preferably higher than between 10 cm², and/or preferably smaller that 20cm², even more preferably smaller than 16cm².

Preferably, the noise-reducing seal 3300 can be flexible, and in particular to a degree which allows the noise-reducing seal 3300 to be compressed under the weight of the object. In preferred embodiments, the ratio of the thickness of the noise reducing seal 3300 when compressed by the object OBJ over the thickness of the noise reducing seal 3300 when non compressed by the object OBJ can be in a range of 95/100 to 80/100.

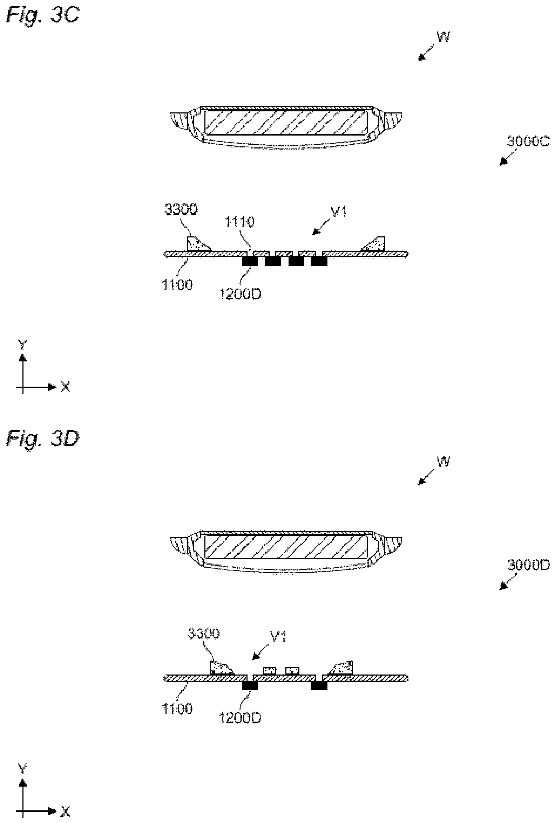

As visible for instance in figures 3A and 3C, in some embodiments the noise-reducing seal 3300 can have a shape complementary to at least part of a shape of the object OBJ. In particular, the illustrated embodiment shows a mechanical watch W as object to be measured, having a front WF and a back WB. In the illustrated embodiment, the seal 3300 has a shape complementary to a part of the front WF of the watch W, such that when the watch W is placed on the noise-reducing seal 3300 a volume V1 comprised between the object OBJ, in this case the watch W and the supporting surface W becomes closed by the noise-reducing seal 3300.

As illustrated in figure 3C, the same approach can be implemented also when the microphones 1200D are placed on the opposite side of the supporting surface 1100, in which case the volume closed by the noise-reducing seal 3300 also comprises the openings 1110.

Moreover, in the presence of a plurality of openings 1110, the noise-reducing seal 3300 can be configured to encircle all openings, as visible in figure 3C, or as little as one opening 1110 can be encircled by a respective noise-reducing seal 3300, as visible in figure 3D. Any intermediate configuration, in which one or more openings, preferably all openings, are encircled by noise-reducing seal 3300 or soft material are also possible.

In the embodiments described so far, the supporting surface 1110 has been described as being substantially stiff. The present invention is however not limited thereto.

As visible for instance in figure 4, the supporting surface 4100 can be flexible and configured to conform to a surface of the object OBJ, in the illustrated embodiment being a watch W.

While the embodiment of figure 4 is illustrated in conjunction with microphones 1200D measuring through openings 1110, it will be clear that a similar approach can be implemented with the microphones placed on the side of supporting surface 4100 facing the object OBJ.

It will be clear to those skilled in the art that the flexible supporting surface 4100 can be held in place by an appropriate non-flexible supporting frame 4400, which is only schematically illustrated in figure 4. In general, the supporting frame 4400 can be configured so that the flexible supporting surface 4100 can move under the weight of the object OBJ such that the flexible supporting surface 4400 can be bent to conform to the shape of the object OBJ, at least to the part of object OBJ in touch with the flexible supporting surface 4100. Also it will be clear that the supporting surface 4100 can be coated with a soft material or receive a piece of soft material, such as felt, to act as a surface seal around the openings and/or to provide a soft material for smooth contact with the watch to measure and improve acoustic measurement by limiting sound leaks.

In other words, the watchmaking measuring device 4000 has a plurality of microphones 1200D, preferably MEMS based microphones, supported on an internal side of the flexible supporting surface 4100. The flexible supporting surface 4100 conforms to the surface of the mechanical watch (e.g. the bottom or the glass) on its external side. The flexible supporting surface 4100 has one or more openings 1110 which are closed by the installed watch and the microphone on the other side. The flexible supporting surface 4100 has preferably a flexible PCB to support and connect the microphones. The MEMS-based microphones each have preferably a diaphragm to transform the acoustic signal (via e.g. air) to a corresponding electric signal. Each of the MEMS-based microphones has a MEMS opening facing the opening 1110 of the flexible supporting surface 4100 to allow air (or fluid or gel) to vibrate between a diaphragm of the MEMS and the watch. This is an acoustic near field measurement.

In the embodiments described so far, the fluid in which the device operates and through which the sound propagates has not been further specified. It will be clear that those skilled in the art that the invention can operate in various fluids and is not limited to using air as propagation medium.

In some embodiments, at least when in use, a volume comprised between at least the object OBJ and a majority, preferably all, of the plurality of microphones 1200 can be filled by a liquid and/or by a gel. Even more preferably, in use, the device and the object can be within a liquid and/or a gel. It will be clear to those skilled in the art that, in those applications, the microphones can be configured to operate in a liquid and/or a gel.

This is particularly advantageous since the acoustic impedance matching between the object to be measured and the liquid or gel and between the liquid or gel and the microphone, or in that case, more precisely a hydrophone, is better than with a coupling through air.

As it is clear from the embodiments described so far, it is a general approach of the invention to place the object to be measured in close proximity of the microphones. In some embodiments, for instance as illustrated in figure 4, or when the object OBJ is placed on the seal 3300 in figure 3, or when it is placed on the supporting surface 1100E in figure 1E, possibly with a soft coating, or when it is placed on the microphones 1200D in figure 1D, a volume V1 can be defined between the microphones and the object.

For instance, in the embodiments of figures 1E and 4, this volume comprises the openings 1110 and any sound-inlet volume of the microphones 1200D. In the embodiment of figure 1D this volume comprises the sound-inlet volume of the microphones 1200D. In the embodiment of figure 3, the volume further comprises the volume defined by the supporting surface 1100, the seal 3300 and the object OBJ. It will thus be clear that the volume is variable in size and definition, but it generally can be understood as a closed volume which is surrounded by at least part of the object OBJ and the sound-inlet opening 1210.

Having defined the volume as above, in some embodiments the measuring device is configured so that, in use, this volume, namely a volume between any of the plurality of microphones 1200, 1200D and the object OBJ is less than 2 cm³, preferably less than 1 cm³, even more preferably less than 10 mm³.

This is particularly advantageous as it reduces the mass of fluid which has to be moved by the sound to be measured, so that better measurements can be achieved even for sounds with very low amplitudes. In the embodiments in which liquid and/or gel is used as fluid, at least this volume can be filled by the liquid and/or gel.

While all embodiments described above are described for any object OBJ, the invention finds a particularly advantageous application when the object OBJ is a mechanical watch W, or a clockwork mechanism CM of a mechanical watch W.

Additionally, while the invention has been so far described as a device, it will be clear that a corresponding inventive method can be implemented. In particular, an embodiment of the invention can relate to a method for measuring sound generated by an object OBJ, wherein the method comprises arranging a plurality of microphones 1200 on a supporting surface 1100 of a measuring device. It will be clear that the measuring device can be any of the devices described above.

The method further comprises providing a controller 1500 connected to the plurality of microphones 1200, and configuring the controller 1500 to combine the output of the plurality of microphones 1200, in any of the manners previously described.

The method further comprises measuring sounds generated by the object OBJ by means of the plurality of microphones 1200 in any of the manners previously described.

In some embodiments, the method can further comprise filling with a liquid and/or a gel at least a volume V1 comprised between the object OBJ and any one of a majority, preferably all, of the plurality of microphones 1200. That is, in presence of a plurality of microphones, the volume between any of the microphones and the object, as described above, can be filled with a liquid and/or a gel.

Moreover, in some embodiments the method can further comprise positioning the object OBJ at a measuring distance D_{DEV} from the plurality of microphones 1200, as previously described, which is less than 1 cm, preferably less than 0,5 cm, even more preferably less than 1 mm.

In the embodiments described above, all microphones are illustrated or described as being positioned on the same side of the object OBJ. It will be clear that the invention is not limited thereto. In preferred embodiments, the plurality of microphones can be physically separated into several clusters and at least two clusters can be placed on two different sides of the object to be measured. It will be clear that this can be achieved by providing a supporting surface which is shaped accordingly or by providing more than one supporting surfaces and dividing the microphones between those. All features described above with reference to a single supporting surface can then be applied to any of those supporting surfaces.

For example, a first cluster of the plurality microphones can be positioned on a bottom face of the object OBJ and a second cluster can be positioned on a top face of the object. Also in this configuration, the plurality of microphones can still be all connected to the same controller.

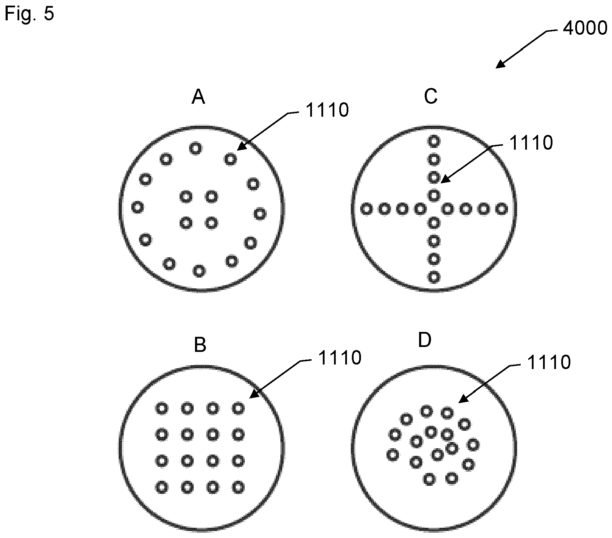

Figure 5 schematically illustrates a top view of the watchmaking measuring device 4000.

Figure 5 illustrates possible shape of openings 1110.

The view A shows the openings 1110 arranged in a circular shape on the outside periphery of the measuring device with also four openings 1110 arranged in a square shape at the center of the measuring device 4000.

The view B shows the openings 1110 arranged in a square shape on the measuring device 4000.

The view C shows the openings 1110 arranged in a cross shape on the measuring device 4000.

The view D shows the openings 1110 arranged in a spiral shape on the measuring device 4000.

The openings 1110 are preferably covered with the microphones 1200D.

A preferred example of the measuring device (sound recording system) according to the invention is a multi-microphone contact head such as comprising 4, 8, 16 or 32 ultrasonic MEMS microphones.

The acoustic access of each microphone consists of an orifice 1 mm in diameter and 0.4 mm deep. There is a direct contact between the mouth of the ports and the wall of the watch being palpated, through 0.2mm thick elastomer or felt. The orifices are placed on a circular plate with an external diameter of 25 mm.

The distribution of the ports being, for example (in the case of 16 microphones):
view A: 4 equally distributed on a circle at the centre with a radius of 4 mm and twelve equally distributed on a circle at the periphery with a radius of 10 mm, or
ciew B: in a 4x4 square matrix with a 4 mm mesh.
view C: a centred cross, with 4 branches, each with 4 microphones, equally distributed, the most central at a radius of 4 mm from the centre of the plate and the outermost at 3 mm from the edge of the plate.
View D: in a spiral of 1.5 turns, the first in the centre of the plate and the sixteenth 6 mm from the outer edge of the plate.

The direct contact of the individual acoustic access ports of the microphones with the room to be tested provides, by definition, a maximum gain in signal-to-noise ratio compared with any other method of acoustic pick-up at a greater distance (laws of geometric attenuation and dissipation of sound waves in the air).

The distribution of the acoustic accesses of the array of independent microphones thus formed makes it possible to pick up acoustic signals comprising both coherent and non-coherent components.

The non-coherent components of the signal of interest provide additional information about the acoustic behaviour of the room under test.

The non-coherent background noise components are added together in a non-constructive way: the overall background noise level of the measurement is then set at -10LOG(n) of the level of the background noise of a microphone taken in isolation, where n is the number of microphones.

The coherent signal components of interest add up constructively, giving a theoretical gain of +10LOG(n) over the sensitivity of a single microphone, where n is the number of microphones.

Taken together, these properties enable very high signal-to-noise ratio capture of all the acoustic signatures of all the events caused by variable forces in watches, as well as the application of near-field antenna focusing techniques.

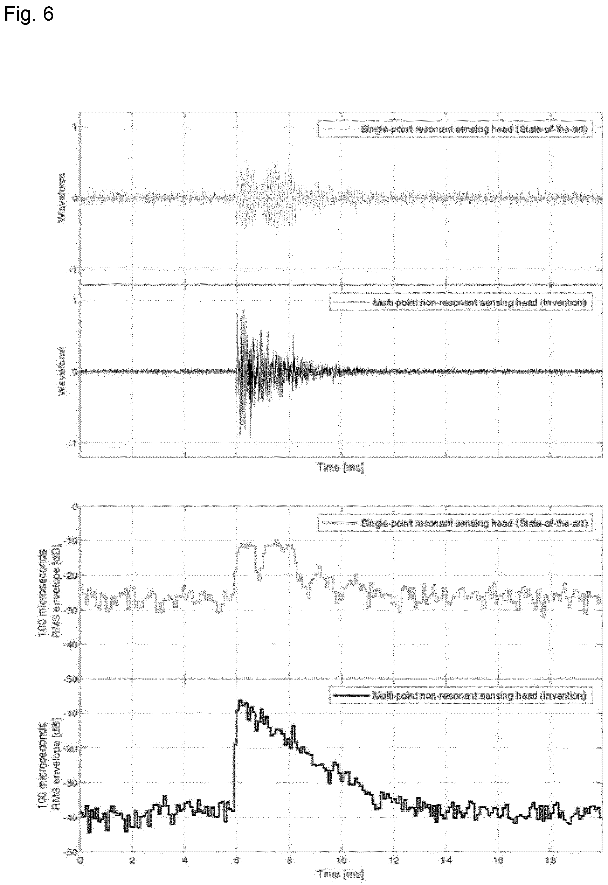

Figure 6 shows performance comparison between the prior art and the present invention about waveform during time passing.

The first graph, starting from the top, represents a waveform of the signal captured by a single-point resonant sensing head according to the prior art.

The second graph represents a waveform of the signal captured by a multi-point non-resonant sensing head according to the present invention.

It can be observed that the occurrence of the first peak is much better detected in the case of the present invention.

The third graph represents an envelope of the signal captured by the single-point resonant sensing head according to the prior art
The fourth graph represents an envelope of the signal captured by the multi-point non-resonant sensing head according to the present invention.

It can be observed that the occurrence of the biggest peak is much better detected in the case of the present invention.

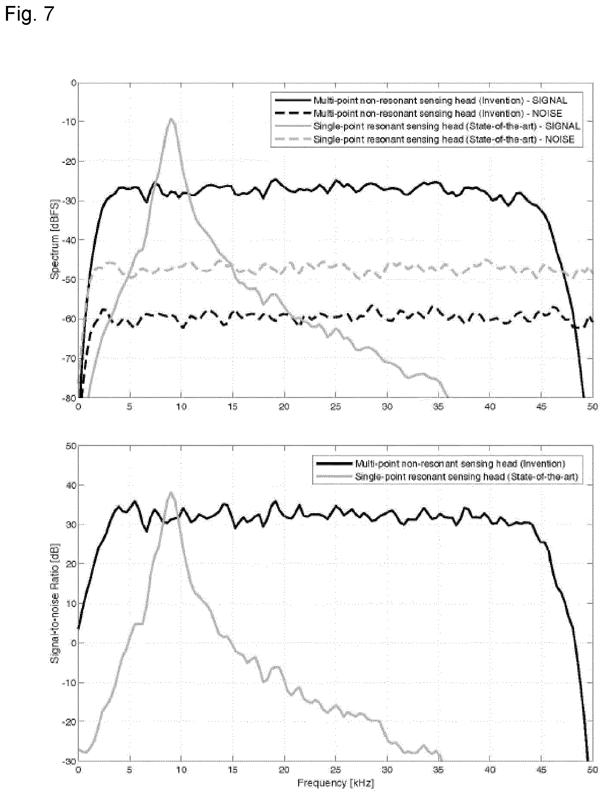

Figure 7 shows performance comparison between the prior art and the present invention about spectrum and signal to noise ration with respect to frequency.

The first graph shows spectrum according to the prior art and according to the present invention.

The second graph shows SNR according to the prior art and according to the present invention.

It appears that the present invention allows for a better detection, better sensibility on a larger band width.

Graphs on figures 6-7 are illustrative of a prior art resonant sensing head e.g. single-point palpation with a resonant sensor in the 500 - 20 kHz band, being a sensor resonant at around 9 kHz, high sensitivity, low noise.

Graphs on figures 6-7 are illustrative of the present invention with a wideband multipoint near-field stethoscope at 500 Hz - 200 kHz, with four microphones at 0.4mm from the watch and frequency band between 3 kHz and 45 kHz.

In both cases, an automatic detection of the shock instant of the watch mechanism is performed, based on a rectified envelope with very high temporal resolution (integration time 100 microseconds).

With the present invention, the emergence (prominence) of the signal is much higher; the rise time is shorter (i.e. the slope is steeper (sharpness)). The shock time stamp is more accurate.

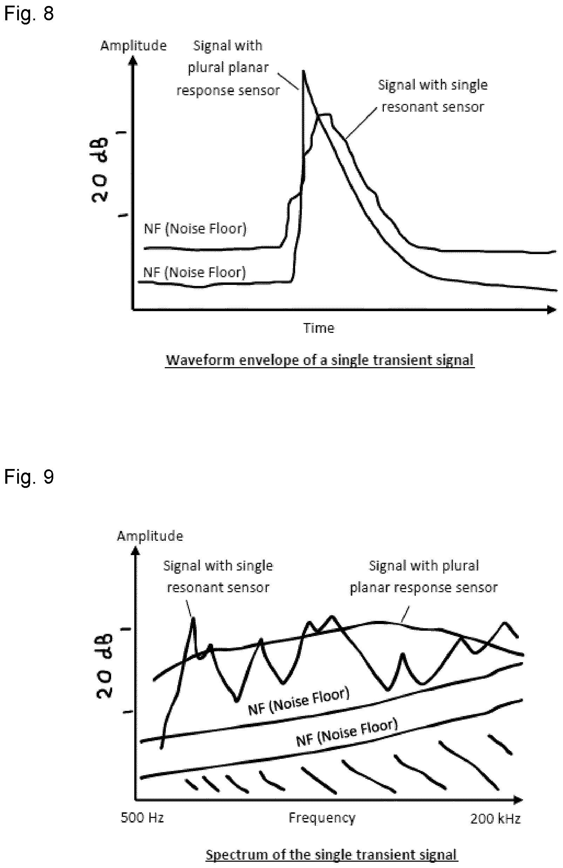

Figure 8 shows performance comparison between the prior art and the present invention about waveform envelop of a single transient signal during time passing.

It appears that the present invention allows for a better detection of single transient signals.

Figure 9 shows performance comparison between the prior art and the present invention about spectrum of the single transient signal with respect to frequency.

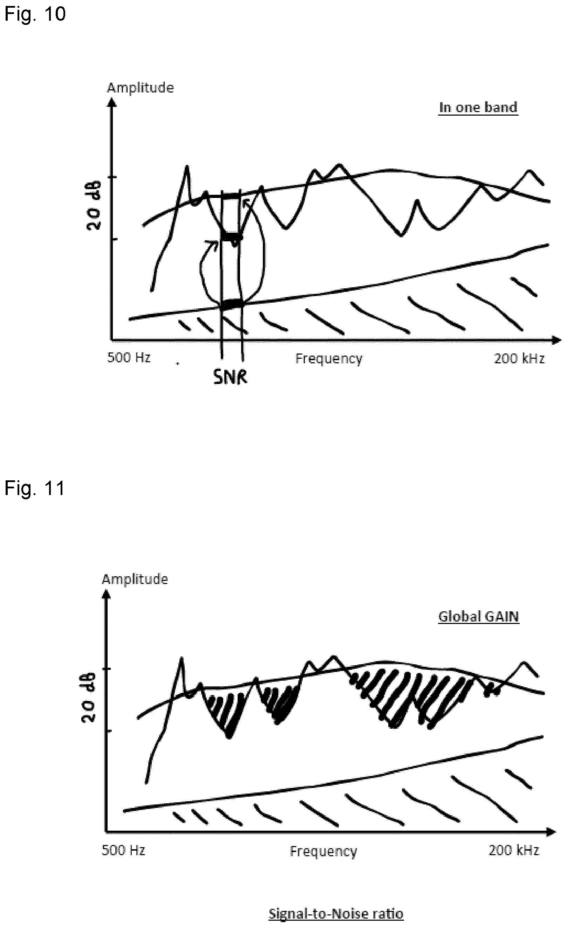

Figure 10 shows performance comparison between the prior art and the present invention about SNR.

It appears that the present invention allows for a better SNR.

Figure 11 shows performance comparison between the prior art and the present invention about SNR and global gain.

It appears that the present invention allows for a better SNR and a interesting global gain.

The difference between the graphs mentioned above respectively expresses the gains in sharpness of the waveforms, envelopes, bandwidth and SNR, thus testifying to the difference in quantity and quality of the basic information sampled respectively with a resonant probe of the prior art and an example of implementation according to the invention.

Thus, it has been described how various embodiments can be implemented to provide a near-field measuring device for measuring sounds emitted by an object OBJ. While various embodiments have been specifically illustrated, and/or described, each one of which comprises one or more features, it will be clear to those skilled in the art that any of those features can also be implemented in isolation, or in combination with any other features as described.

### List of reference numerals

1000, 1000D, 1000E: measuring device
1100: supporting surface
1110: opening
1200, 1200D: microphones
1210: sound-inlet opening
1500: controller
OBJ: object
D_{INTRA}: distance between neighboring microphones
D_{TOT}: longest distance covered by microphones
D_{DEV}: distance between microphones and object
2000, 2000C-2000H: measuring device
2100: housing
3000, 3000C, 3000D: measuring device
3300: seal or soft material
W: watch
WB: watch back
WF: watch front
CM: clockwork mechanism
4000: measuring device
4100: supporting surface
4400: supporting frame
V1: volume

## Claims

1. A watchmaking measuring device (1000, 1000D, 1000E, 2000, 2000C-2000H, 3000, 3000C, 3000D, 4000) for measuring sound generated by a mechanical watch (W), the measuring device comprising:
a supporting surface (1100, 4100),
a plurality of microphones (1200, 1200D) placed on the supporting surface (1100, 4100),
a controller (1500) connected to the plurality of microphones (1200, 1200D), wherein the controller (1500) is configured to process the output of the plurality of microphones (1200, 1200D) so as to obtain one or more signals representative of the sound generated by the mechanical watch (W),
wherein the supporting surface (1100, 4100) comprises at least one opening (1110) and the supporting surface (4100) is configured to support the mechanical watch (W) so that the mechanical watch (W), during measurement, overlaps with the at least one opening (1110) on an external side, and at least one microphone (1200, 1200D) overlaps the at least one opening (1110) on an internal side, opposite to the external side,
wherein the supporting surface (4100) is flexible and configured to conform to a surface of the mechanical watch (W).

2. The watchmaking measuring device (1000, 1000D, 1000E, 2000, 2000C-2000H, 3000, 3000C, 3000D, 4000) according to any claim 1, wherein
the plurality of microphones (1200, 1200D) is configured to have an amplitude mismatch lower than 3 dB, preferably lower than 2 dB, even more preferably lower than 1 dB, and/or
the plurality of microphones (1200, 1200D) is configured to have a phase mismatch lower than 10°, preferably lower than 5°, even more preferably lower than 1°.

3. The watchmaking measuring device (1000, 1000D, 1000E, 2000, 2000C-2000H, 3000, 3000C, 3000D, 4000) according to any previous claim, wherein
the plurality of microphones (1200, 1200D) are MEMS-based microphones,
the plurality of microphones (1200, 1200D) is separated from each other by an intra-microphone distance (D_{INTRA}),
the intra-microphone distance (D_{INTRA}) is lower than 1/2 of a smallest wavelength to be measured by the measuring device, preferably lower than 1/4 of the smallest wavelength, even more preferably lower than 1/8 of the smallest wavelength.

4. The watchmaking measuring device (1000, 1000D, 1000E, 2000, 2000C-2000H, 3000, 3000C, 3000D, 4000) according to any previous claim, wherein
the plurality of microphones (1200, 1200D) together covers a total distance (D_{TOT}),
the total distance (D_{TOT}) is lower than a smallest wavelength to be measured by the measuring device, preferably lower than 1/2 of the smallest wavelength, and/or
the total distance (D_{TOT}) is lower than 10cm, preferably lower than 5cm, even more preferably lower than lower than 3cm.

5. The watchmaking measuring device (1000, 1000D, 1000E, 2000, 2000C-2000H, 3000, 3000C, 3000D, 4000) according to any previous claim, wherein
the plurality of microphones (1200, 1200D) comprises at least 4 microphones, preferably at least 16 microphones, even more preferably at least 32 microphones.

6. The watchmaking measuring device (1000, 1000D, 1000E, 2000, 2000C-2000H, 3000, 3000C, 3000D, 4000) according to any previous claim, wherein
the plurality of microphones (1200, 1200D) implements an acoustic antenna.

7. The watchmaking measuring device (1000, 1000D, 1000E, 2000, 2000C-2000H, 3000, 3000C, 3000D, 4000) according to any previous claim, wherein
the plurality of microphones (1200, 1200D) comprises at least 2, preferably at least 4, microphones (1200, 1200D), or at least 2, preferably at least 4, groups of microphones (1200, 1200D),
wherein different microphones, or different groups of microphones, are configured to measure sounds on different frequency ranges,

8. The watchmaking measuring device (1000, 1000D, 1000E, 2000, 2000C-2000H, 3000, 3000C, 3000D, 4000) according to claim 7, wherein
at least two of the different frequency ranges are contiguous.

9. The watchmaking measuring device (1000, 1000D, 1000E, 2000, 2000C-2000H, 3000, 3000C, 3000D, 4000) according to claim 7 or 8, wherein
the different frequency ranges have respective bandwidths, and
for frequency ranges which are contiguous, the bandwidth or the higher frequency range is double the bandwidth or the lower frequency range.

10. The watchmaking measuring device (1000, 1000D, 1000E, 2000, 2000C-2000H, 3000, 3000C, 3000D, 4000) according to any of claims 7 to 9, wherein
the different frequency ranges are each defined by a respective minimum frequency value and maximum frequency value, and
a ratio of the maximum frequency value over the minimum frequency is at least 1.1, preferably at least 1.2, even more preferably at least 1.5, and/or
the ratio of the maximum frequency value over the minimum frequency is at most 4, preferably at most 3, even more preferably at most 2,
different frequency ranges are higher than 5 kHz, preferably higher than 2 kHz, even more preferably higher than 500 Hz, and/or lower than 80 kHz, preferably lower than 120 kHz, even more preferably lower than 200 kHz
a plurality of, preferably a majority of, the plurality of microphones (1200, 1200D), even more preferably all of them, is capable of measuring sound in a same bandwidth,
the different frequency ranges are defined by respective different bandpass filters, which are configured to act on the output of the microphones (1200, 1200D).

11. The watchmaking measuring device (1000, 1000D, 1000E, 2000, 2000C-2000H, 3000, 3000C, 3000D, 4000) according to any previous claim, wherein
the controller (1500) is configured to apply signal processing to output signals of the plurality of microphones (1200) so as to reduce noise common to the output signals,
each of the plurality of microphones (1200) has a self-noise level which is higher than a minimum sound to be measured from the mechanical watch (W).

12. The watchmaking measuring device (1000, 1000D, 1000E, 2000, 2000C-2000H, 3000, 3000C, 3000D, 4000) according to any previous claim, wherein
the supporting surface (1100, 4100) comprises, or is, a printed circuit board, to which the plurality of microphones (1200, 1200D) is electrically connected.

13. The watchmaking measuring device (1000, 1000D, 2000, 2000C-2000H, 3000, 4000) according to any previous claim, wherein
the plurality of microphones (1200, 1200D) is placed on a side of the supporting surface (1100,4100) facing the mechanical watch (W).

14. The watchmaking measuring device (1000E, 3000C, 3000D, 4000) according to any previous claim, wherein
the supporting surface (1100, 4100) has a plurality of openings (1110),
each of the plurality of microphones (1200D) comprises a sound-inlet opening (1210),
the plurality of microphones (1200D) is assembled on the supporting surface (1100, 4100) so that the plurality of microphones (1200D) closes the plurality of openings (1110), and so that the plurality of sound-inlet openings (1210) faces the plurality of openings (1110).

15. The watchmaking measuring device (1000, 1000D, 1000E, 2000, 2000C-2000H, 3000, 3000C, 3000D, 4000, 4000) according to any previous claim,
wherein the measuring device is configured so that, in use, a measuring distance (D_{DEV}) between any of the plurality of microphones (1200, 1200D) and the mechanical watch (W) is less than 2 cm, preferably less than 1 cm, even more preferably less than 5mm,
the device is configured so that the mechanical watch (W) is held at said measuring distance (D_{DEV}) without additional support.

16. The watchmaking measuring device (2000, 2000C-2000H) according to any previous claim,
further comprising a housing (2100) configured to define a volume (V), and wherein
the housing (2100) comprises, or is connected to, the supporting surface (1100, 4100),
the plurality of microphones (1200, 1200D) is placed inside of the volume (V),
the supporting surface (1100, 4100) comprises a plurality of openings (1110),
each of the plurality of openings (1110) has an area comprised between 0.5mm² and 50mm², preferably between 0.5mm² and 25mm², even more preferably between 0.5mm² and 5mm².

17. The watchmaking measuring device (3000, 3000C, 3000D) according to any previous claim, further comprising a noise-reducing seal (3300) or a soft surface coating preferably acting as noise-reducing seal,
wherein the noise-reducing seal (3300) is configured to limit environmental noise from reaching the plurality of microphones (1200, 1200D),
wherein the noise-reducing seal (3300) has shape complementary to at least part of a shape of the mechanical watch (W).

18. The watchmaking measuring device (4000) according to any previous claim, wherein
the supporting surface (4100) is covered by a soft material such as felt.

19. The watchmaking measuring device (1000, 1000D, 1000E, 2000, 2000C-2000H, 3000, 3000C, 3000D, 4000) according to any previous claim, wherein
in use, a volume comprised between the mechanical watch (W) and a majority, preferably all, of the plurality of microphones (1200D, 1200) is filled by a liquid and/or by a gel.

20. The watchmaking measuring device (1000, 1000D, 1000E, 2000, 2000C-2000H, 3000, 3000C, 3000D, 4000) according to any previous claim, wherein
the measuring device is configured so that, in use, a volume between any of the plurality of microphones (1200, 1200D) and the mechanical watch (W) is less than 2 cm³, preferably less than 1 cm³, even more preferably less than 10 mm³.

21. A method for measuring sound generated by a mechanical watch (W), the method comprising:
arranging a plurality of microphones (1200, 1200D) on a supporting surface (1100, 4100) of a measuring device (1000, 1000D, 1000E, 2000, 2000C-2000H, 3000, 3000C, 3000D, 4000), providing a controller connected to the plurality of microphones (1200),
configuring the controller (1500) to combine the output of the plurality of microphones (1200, 1200D),
measuring sounds generated by the mechanical watch (W) by means of the plurality of microphones (1200, 1200D).
